# EUROPEAN PATENT APPLICATION

(11) **EP 4 807 959 A1**
(43) Date of publication of application: **16.09.2026**
(21) Application number: 25196849.1
(22) Date of filing: 19.08.2025
(51) Int. Cl.: H02M 1/00, H02M 3/335, H02M 1/14, H02M 3/158

(54) **OPERATING A POWER CONVERTER**

(30) Priority: 13.03.2025 EP 25163429; 09.07.2025 EP 25188547
(71) Applicant: Infineon Technologies Austria AG, 9500 Villach (AT)
(72) Inventor: IOB, Federico, 33100 Udine (IT); RIZZOLATTI, Roberto, 9523 Villach (AT); SAGGINI, Stefano, 33100 Udine (IT); URSINO, Mario, 9500 Villach (AT); DEBOY, Gerald Josef, 9061 Klagenfurt (AT)
(74) Representative: Infineon Patent Department

(57) **Abstract**

The disclosed concepts relate to the operation of a power converter (i.e., a circular voltage regulator) comprising at least four converter paths. Each converter path comprises an input node, an output node, a first winding, and a second winding, wherein the first winding is coupled in series between the input node and the second winding, and the second winding is coupled in series between the first winding and the output node. Each converter path is configured to conduct current in a same direction between the input node and the output node, and each winding of each of the converter paths is inductively coupled to a winding of a different converter path. Operating said power converter comprises receiving a phase firing sequence describing a sequence of selected converter paths amongst the converter paths, and providing a sequence of firing voltages to input nodes of the converter paths based on the phase firing sequence. At least one consecutive pair of selected converter paths in the phase firing sequence do not comprise windings that are inductively coupled with each other.

## Description

### TECHNICAL FIELD

The present disclosure generally relates to a method and apparatus for operating a power converter.

### BACKGROUND

Power converters that convert a 48V to a digital load voltage are typically based on a two-stage approach. A two-stage approach exploits the benefit of high step-down capability and high-power density of an unregulated Intermediate Bus Converter (IBC), while a second stage, which is typically designed with a buck converter, enables regulation at digital load level. To meet footprint requirements, high switching frequency operation is needed both in the first and second stages. However, high frequency operation leads to higher losses.

Moreover, various digital loads (e.g. microprocessors, accelerators, ASICs) have high current demands and strenuous transient requirements. In some cases, currents of up to 1000A at voltages of around 0.75V are required. At these levels, parasitic components may deteriorate dynamic performance of the converter rapidly, while also impairing the power conversion efficiency due to distribution losses.

There is hence a need to provide a power converter, particularly for powering modern processors, with high power density and good transient performance.

### SUMMARY

According to one aspect, there is provided a method for operating a power converter.

The power converter comprises at least four converter paths. Each converter path comprises an input node, an output node, a first winding, and a second winding. The first winding is coupled in series between the input node and the second winding, and the second winding is coupled in series between the first winding and the output node. Each converter path is configured to conduct current in a same direction between the input node and the output node. Each winding of each of the converter paths is inductively coupled to a winding of a different converter path.

The method comprises receiving a phase firing sequence describing a sequence of selected converter paths amongst the converter paths. At least one consecutive pair of selected converter paths in the phase firing sequence do not comprise windings that are inductively coupled with each other. The method further comprises providing a sequence of firing voltages to input nodes of the converter paths based on the phase firing sequence.

According to another aspect of the present disclosure, there is provided an apparatus.

The apparatus comprises power converter including at least four converter paths. Each converter path comprises an input node, an output node, a first winding, and a second winding. The first winding is coupled in series between the input node and the second winding, and the second winding is coupled in series between the first winding and the output node. Each converter path is configured to conduct current in a same direction between the input node and the output node. Each winding of each of the converter paths is inductively coupled to a winding of a different converter path.

In addition, the apparatus comprises a controller, and a memory coupled to the controller, the memory for storing instructions for the controller. The instructions for are receiving a phase firing sequence describing a sequence of selected converter paths amongst the converter paths, wherein at least one consecutive pair of selected converter paths in the phase firing sequence do not comprise windings that are inductively coupled with each other; and providing a sequence of firing voltages to input nodes of the converter paths based on the phase firing sequence.

Those skilled in the art will recognize additional features and advantages upon reading the following detailed description, and upon viewing the accompanying drawings.

### BRIEF DESCRIPTION OF THE DRAWINGS

Examples are explained below with reference to the drawings. The drawings serve to illustrate certain principles, so that only aspects necessary for understanding these principles are illustrated.
FIG. 1 presents a circuit diagram of a trans-inductor voltage regulator (TLVR);
FIG. 2 presents a circuit diagram of a power converter;
FIG. 3 presents a circuit diagram of a power converter with six phases, with an equivalent voltage generator coupled to the input nodes of each of the converter paths;
FIG. 4 presents an equivalent circuit of the power converter of FIG. 3 during steady state operation;
FIG. 5 is a flow diagram of a method for operating a power converter according to an embodiment; and
FIG. 6 presents a graph of a sequential phase firing sequence, and the magnetic flux density within each coupled inductor;
FIG. 7 presents a graph of an improved phase firing sequence, and the magnetic flux density within each coupled inductor; and
FIG. 8 is a block diagram of an apparatus according to another embodiment.

It should be noted that these figures are diagrammatic and not drawn to scale. Relative dimensions and proportions of parts of these figures have been shown exaggerated or reduced in size, for the sake of clarity and convenience in the drawings.

### DETAILED DESCRIPTION

The following description sets forth exemplary aspects of the present disclosure. It should be recognized, however, that such description is not intended as a limitation on the scope of the present disclosure. Rather, the description also encompasses combinations and modifications to those exemplary aspects described herein.

The disclosed concepts relate to the operation of a power converter (i.e., a circular voltage regulator) comprising at least four converter paths. Each converter path comprises an input node, an output node, a first winding, and a second winding, wherein the first winding is coupled in series between the input node and the second winding, and the second winding is coupled in series between the first winding and the output node. Each converter path is configured to conduct current in a same direction between the input node and the output node, and each first winding of the converter paths is inductively coupled to a second winding of a different converter path. Operating said power converter comprises receiving a phase firing sequence describing a sequence of selected converter paths amongst the converter paths, and providing a sequence of firing voltages to input nodes of the converter paths based on the phase firing sequence. At least one consecutive pair of selected converter paths in the phase firing sequence do not comprise windings that are inductively coupled with each other.

Accordingly, the power converter is converted in a much more efficient manner. It has surprisingly been identified that, in contrast to typical power converters, the performance of the circular power converter depends strongly on the firing sequence. That is, the order by which firing voltages are applied to inputs of the converter paths in the closed chain loop greatly influences the performance of the power converter. More specifically, the order greatly impacts the magnetic ripple in the core of the inductively coupled pairs of windings (i.e., coupled inductors), which in turn impacts power losses and heating of the power converter.

Perhaps more surprisingly, it has been discovered that the worst case scenario for controlling the power converter is to control the converter paths in order. To be precise, a phase firing sequence in which consecutive pairs of selected converter paths in the phase firing sequence comprise windings that are inductively coupled with each other leads to the highest losses and worst performance. For example, for a power converter with 6 converter paths labelled converter paths 1-6 (with converter path 1 coupled to converter paths 2 and 6 via first and second windings, converter path 2 coupled to converter paths 1 and 3 via first and second windings, and so on), the worst firing sequence is 1-2-3-4-5-6. In contrast, improvement in the performance of the power converter may be yielded when the phase firing sequence imposes that at least one consecutive pair of selected converter paths in the phase firing sequence do not comprise windings that are inductively coupled with each other.

Therefore, proposed embodiments leverage this discovery by providing an improved phase firing sequence for controlling the power converter.

To best understand the disclosure, it is useful to first appreciate the operation of a trans-inductor voltage regulator (TLVR) and a zero-bias TLVR. In contrast to a conventional multi-phase converter, in a TLVR a load jump leading to an increase of the equivalent duty cycle in one phase (and hence to an increase of current in this phase) results in an increase of output current in all phases. This inherent feature of the TLVR allows a much faster transient response corresponding to a significantly lower effective output inductance of the system.

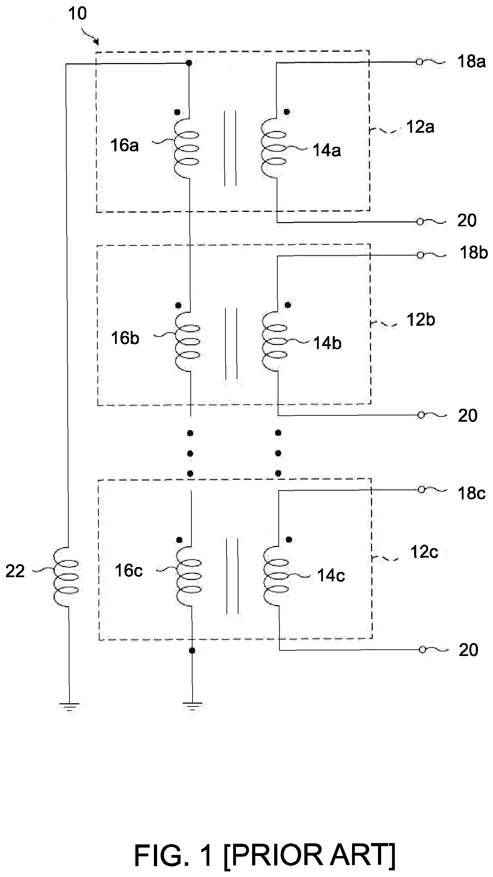

More specifically, Fig. 1 is a circuit diagram of an example TLVR 10. As shown, the TLVR 10 comprises a plurality of transformers 12a-c. Each transformer 12a-c comprises a first winding 14a-c on first side of the TLVR 10, and a second winding 16a-c on a second side of the TLVR 10. Each of the first windings 14a-c is provided between a respective input node 18a-c (coupled to a respective phase input) and a common output node 20. That is, the first windings 14a-c are each coupled to a different phase input, but are coupled to a common output. Each of the second windings 16a-c is coupled/provided in series with the others, and collectively they are referenced to ground. This series connection between ground is commonly known as the TLVR line, and may further comprise a transient inductor 22.

Accordingly, the TLVR 10 delivers power from an input voltage supplied in multiple phases, to a common output 20 that may be considered a point-of-load. Rather than using uncoupled individual windings coupled to each phase input (as in traditional voltage regulators), each phase input is input to a transformer 12a-c.

When there is a load jump (i.e. an increase in the current/power required by the load), a pulse width modulation (PWM) duty cycle associated with one or more of the phase inputs (i.e. of the one or more switches coupled to the input node 18a-c) may be increased. For TLVR 10, as all of the phases are indirectly coupled by the second windings 16a-c provided in series, an increase in current provided in one phase input leads to an increase of output current in all phases. This feature of the TLVR 10 allows a faster transient response corresponding to a significantly lower effective output inductance of the system.

In order to overcome issues in terms of power density of the TLVR 10, there has also been proposed a zero-bias TLVR. In contrast to the TLVR 10 disclosed in FIG. 1, each of the second windings 16a-c coupled in series are not coupled between an equipotential (e.g., ground). Instead, one end of the series coupled second windings 16-1a-c is coupled to a phase input, and opposite end of the series coupled second windings 16a-c is coupled to the common output node 20. In other words, the TLVR line is not referenced to ground, but is instead provided between a phase input, and the common output node 20. As a result, a required core area for each of the transformers 12a-c is reduced.

Nonetheless, problems arise with the zero-bias TLVR when several phases are provided in parallel. This is, with the provision of each further phase input, a further first winding is required, and thus another second winding in the TLVR path. Thus, with each further phase input, there is an increase of resistance in the TLVR line, which also now carries active energy to the load (in contrast to the standard TLVR 10). Inherently, such a limitation does not allow exploitation of the DC bias cancellation benefit when a large number of phases are needed, and moreover would intrinsically limit the bandwidth of the zero-bias TLVR.

To summarize, whilst existing TLVRs provide improved transient response compared to standard multi-phase converters, they are limited in terms of power density. By connecting a phase input to the TLVR line to provide a zero-bias TLVR, a power density can be improved by reduction of required transformer core area. However, this setup is limited in the number of phases that may be coupled before resistive loses become prohibitive.

Accordingly, recently a novel power converter has been suggested.

The power converter comprises a plurality of converter paths that are coupled in a circular manner. More specifically, each converter path comprises an input node, a first winding, a second winding, and an output node, coupled such that each first winding provided in series between the input node and the second winding of the same converter path, and the second winding is provided in series between the first winding and the output node of the same converter path. Each converter path is configured to conduct current in a same direction between the input node and the output node. In addition, each winding of each of the converter paths is inductively coupled to a winding of a different converter path. Each pair of inductively coupled windings thereby form a coupled inductor, also referred to as an elemental transformer.

As each converter path conducts current in a same direction, a DC flux induced in the winding of each converter path is cancelled/compensated by the current flowing through the coupled winding. In the case where each first winding is coupled to a second winding, a DC flux induced in the first winding of each converter path is cancelled/compensated by the current flowing through the second winding coupled to the respective first winding. Equally, a DC flux induced in the second winding of each converter path is cancelled/compensated by the current flowing through the first winding coupled to the respective second winding.

The cancellation of the DC flux between pairs of inductively coupled windings (e.g., between first windings and respective second windings) depends on a magnitude of the currents in these windings. As the coupled windings belong to separate converter paths, and thus separate current path, the respective currents depend on the duty cycle, the overlap of duty cycles and the corresponding phase shift between input phase voltages provided to input nodes of these neighboring converter paths. The cancellation effect of the DC flux depends consequently on electrical parameters of the individual parallel converter paths. By tuning the phase shift and the overlap of duty cycles, the cancellation effect of coupled windings can be controlled. In case of incomplete cancellation, the current difference will create a magnetic flux, which corresponds to an additional inductance. In other words, phase shift and overlap of duty cycles provide an effective means of controlling the inductance of the power converter, and to control hence the dynamic response quality of the power converter. For example, by firing all phases simultaneously, the overlap of phases is maximized at a phase difference of zero. The cancellation effect is maximized, and the inductance of the power converter is minimal.

Hence, the power converter provides a magnetic structure that may exhibit improved transient response and power density when powering a high current load (e.g., a digital load).

In other words, the power converter provides a plurality of elementary transformers (formed by coupling of two windings of different converter paths) coupled in series, with each elementary transformer having windings exposed to current from two different converter paths (with each current having a different direction) thereby cancelling DC flux. As a result, a power converter with good transient response and power density may be realised. In contrast to the TLVR, the circular voltage regulator does not require a single TLVR path that can experience high resistive losses. Instead, DCR resistance is balanced across the circular voltage regulator. Further, as each elementary transformer does not experience a DC flux, a core of each elementary transformer may be smaller. The circular multi-phase magnetic structure of the voltage regulator therefore effectively couples all coupled input phases, similarly to a zero-bias TLVR, but without sharing a common winding among all the phases.

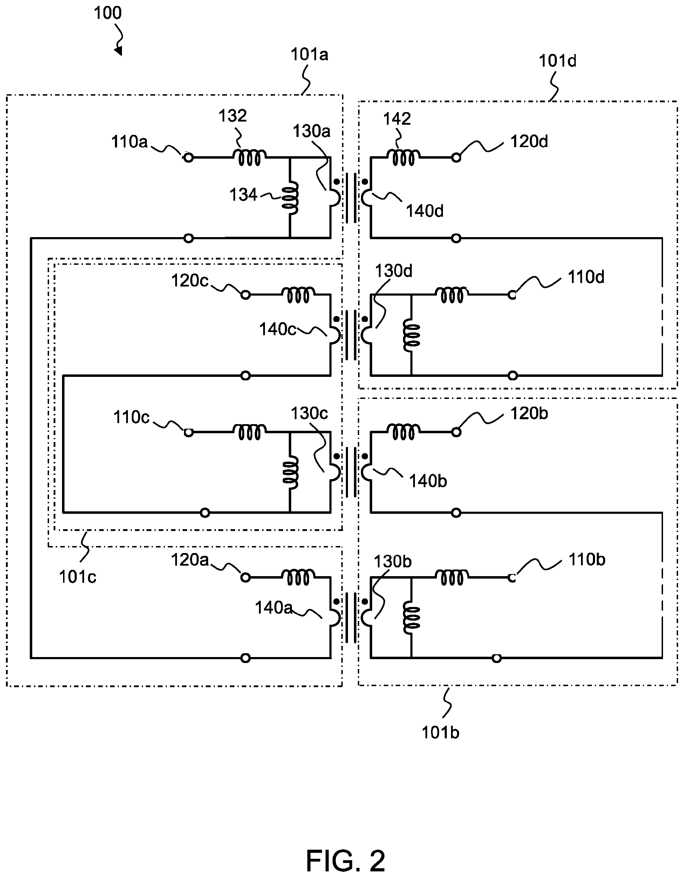

FIG. 2 presents a circuit diagram of such a power converter 100-1.

As shown, the power converter 100-1 comprises a plurality of converter paths 101a-d. Each converter path 101a-d comprises an input node 110a-d, an output node 120a-d, a first winding 130a-d, and a second winding 140a-d. The first winding 130a-d of each converter path 101a-d is coupled in series between the input node 110a-d and the second winding 140a-d of the respective converter path. The second winding 140a-d of each converter path 101a-d is coupled in series between the first winding 130a-d and the output node 120a-d of the respective converter path101a-d.

Each converter path 101a-d is configured to conduct current in a same direction between the input node 110a-d and the output node 120a-d. That is, all of the converter paths 101a-d conduct current from their respective input node 110a-d to their respective output node 120a-d, or all of the converter paths 101a-d conduct current from their respective output node 120a-d to their respective input node 110a-d.

Every first winding 130a-d is inductively coupled to a second winding 140a-d of a different converter path101a-d. That is, it is never the case that the first winding 130a-d of a converter path 101a-d is inductively coupled to the second winding 140a-d of the same converter path 101a-d. Thus, in the depicted embodiment, each first winding 130a-d of the converter paths 101a-d is inductively coupled to a second winding 140a-d of a different converter path 101a-d. Alternatively, in another embodiment, the first winding 130a-d of each converter path 101a-d may be inductively coupled to a first winding of a different converter path 130a-d, and the second winding 140a-d of each converter path 101a-d may be inductively coupled to a second winding of a different converter path 101a-d, given that the windings are wrapped around the core in different directions, thereby cancelling magnetic flux induced by current flowing through the windings. As a result, each pair of inductively coupled windings is coupled to each other pair of inductively coupled windings in a series loop (at least indirectly via another pair of inductively coupled windings).

For example, a first winding 130a of a first converter path 101a may be inductively coupled to a second winding 140b of a second converter path 101b thereby coupling the first converter path 101a to the second converter path 101b, a first winding 130b the second converter path 101b may be inductively coupled to a second winding 140c of a third converter path 101c thereby coupling the second converter path 101b to the third converter path 101c, a first winding 130c of the third converter path 101c may be inductively coupled to a second winding 140d of a fourth converter path 101d thereby coupling the third converter path 101c to the fourth converter path 101d, and a first winding 130d of the fourth converter path 101d may be inductively coupled to a second winding 140a of the first converter path 101a thereby coupling the fourth converter path 101d to the first converter path 101a.

Accordingly, in this example, each of the first to fourth converter paths 101a-d are coupled in a series loop by the inductive coupling of the windings. Of course, it is worth noting that there may be fewer converter paths (e.g., three converter paths), or more converter paths (e.g., five converter paths). In any case, the same principle applies with the first windings 130a-d inductively coupled to second windings 14a-d of a different converter path 101a-d, with each pair of inductively coupled windings being coupled in a closed chain loop.

To be clear, each pair of inductively coupled windings depicted in FIG. 2 is presented in the form of an elemental transformer equivalent circuit. That is, each first winding 130a-d is shown with a primary leakage inductance 132, each second winding 140a-d is shown with a second leakage inductance 142, and a magnetizing inductance 134 of each pair of windings is shown in parallel with each first winding 130a-d.

A magnetizing inductance 134 of each pair of inductively coupled windings may be significantly higher than a leakage inductance 132 of the respective first winding 130a and a leakage inductance 142 of the second winding 140d. For example, the magnetizing inductance 134 of each pair of inductively coupled windings may be at least ten times greater than each leakage inductance 132, 142. Nonetheless, other ratios between the magnetizing inductance and leakage inductance are possible.

Furthermore, the inductively coupled first winding 130a-d and second winding pairs 140a-d may include a same number of turns. In other words, each first winding 130a-d may be coupled to a second winding 140a-d having a same number of turns. Accordingly, a turns ratio may be close to unity. Indeed, this will also mean that, for each converter path 101a-d, the first winding 130a-d and the second winding 140a-d belonging to the same converter path 101a-d will have a same number of turns. This may ensure that each converter path 101a-d has a similar direct current resistance.

Nevertheless, it should be noted that the turns ratio may not be unity - for example when one of the converter paths 101a-d receives a different magnitude of current to the other converter paths 1-1a-d. That is, each of the windings may not have the same number of turns.

For instance, when one of the converter paths 101a receives a current of a smaller magnitude than the other converter paths 101b-d, then the first winding 130a and the second winding 140a of said converter path 101a may have a greater number of turns than the first windings 130b-d and the second windings 140b-d of the other converter paths 101b-d to ensure balanced operation of the power converter.

By way of simplified example, (for a power converter with four converter paths) given that three of the converter paths receive a 20A current and one of the converter paths receive a 10A current, the converter path receiving the 10A current may have a first winding and second winding with double the number of turns (e.g., 2 turns) compared to the first winding and second winding of the converter paths receiving the 20A currents. More generally, the number of turns of the first winding and second winding of each converter path multiplied by the current provided to the respective converter path will equal a constant, the constant being the same for each converter path.

Thus, for each least one of the converter paths 101a-d, the first winding 130a-d and second winding 140a-d of the converter path 101a-d may include a first number of turns. And, for at least one other converter path 101a-d, the first winding 130a-d and second winding 140a-d of the converter path 101a-d may include a second number of turns different to the first number of turns.

An advantage of the power converter 100, is that the converter paths 101a-d may be similar and/or arranged in a circular manner. More specifically, each first winding 130a-d may be similar to each other first winding 130a-d, and each second winding 140a-d may be similar to each other second winding 140a-d. Furthermore, each of the converter paths 101a-d may have a similar length (e.g., the connections between the input node 110a-d, the first winding 130a-d, the second winding 140a-d, and the output node 120a-d of each converter path 101a-d may be a similar length). As a result, each of the converter paths 101a-d may have a substantially similar direct current resistance. This leads to improved balance of the converter, with a good transient response. Indeed, in contrast to the zero-bias TLVR described above, this may be the case no matter how many phases are provided.

Furthermore, as the current through the first winding 130a-d and the current through the paired second winding 140a-d in different directions, a DC magnetic flux may be cancelled. Thus, from the perspective of each pair of inductively coupled windings, no steady state DC flux is provided. This means that each pair of inductively coupled windings does not require a large core to accommodate such DC flux. Thus, a power density of the voltage regulator is improved.

The input node 110a-d of each of the converter paths 101a-d may be coupled to respective phase inputs. When there is a load jump (i.e. an increase in the current/power required by a load coupled to the output nodes), a duty cycle of the voltage provided by one or more of the phase inputs may be increased. As each of the converter paths 101a-d are linked, an increase in current provided in one phase input leads to an increase of output current of all converter paths 101a-d. To be clear, each of the output nodes 120a-d of the plurality of converter paths 101a-d may be coupled to a common output node for connection to a load.

To be clear, each phase input may have different input voltage magnitudes and frequencies.

As a result of the power converter structure, an AC magnetic flux through each pair of inductively coupled windings only depend on a frequency of the voltage provided by each phase input, and on the voltage required by the load coupled to the output nodes.

Moreover, the phase inputs provided to each of the input nodes 110a-d may be provided by respective switching networks. The switching networks 112a-d may be driven by a controller to provide an appropriate AC voltage to each input node. In other words, each of the input nodes 110a-d of the converter paths may be coupled to respective switching networks. Any switching network that can receive an input voltage, and provide an alternating output voltage may be employed. In further examples, one or more of the input nodes may be coupled to an injection circuit.

Each switching network 112a-d may be identical, or may be dissimilar, depending on the application. Therefore, to be clear, each switching network 112a-d may be coupled to a different input voltage, and may provide a phase input having different frequencies.

In one example, each switching network may comprise a high side switch coupled between a common input voltage and the input node of the respective converter path, and a low side switch coupled between the input node of the respective converter path and a reference voltage. The reference voltage of each switching network may be ground, or may be a positive or negative reference potential. The power converter 100-3 may therefore be implemented with classic buck converters coupled to the respective input nodes 110a-d of each converter path. Each input node 110a-d may be coupled to a half-bridge between a DC input voltage and a reference potential (e.g., ground potential). This implementation may be particularly suited for when high current is needed for a low voltage load. This would enable zero-bias within each pair of inductively coupled windings during any load condition.

The core loses and current ripple of the TLVR depicted in FIG. 1 are independent of the sequence that the phase inputs are provided to the input nodes 18a-c of the first winding 14a-c. That is, regardless of the order according to which a voltage is provided to the first windings 14a-c (i.e., the firing sequence), the TLVR will react in generally the same manner. Surprisingly, the power converter 100 of FIG. 2 reacts differently depending on the order according to which a voltage is provided to the input nodes 110a-d of the converter paths 101a-d. In other words, core losses ad current ripple depend on the firing sequence of the phase inputs provided to the input nodes 110a-d.

The power converter 100 thus features a distinct optimal firing sequence, which results in a reduced magnetizing ripple. Specifically, the order in which the phases are activated, relative to their physical displacement, plays a crucial role in minimizing both core losses and current ripple in each phase. Therefore, the efficiency of operation of the power converter directly impacts the actual current capability of each phase, as an sub-optimal firing sequence leads to excessive heating and larger core loses.

Put another way, the power converter enables high power density in buck-based converters by ensuring zero DC flux within the magnetic material. This converter achieves the necessary regulation through the equivalent leakage inductance, introducing a new paradigm that significantly enhances power density. However, unlike a standard inductor-based buck converter, the interaction between the phases introduces the need to control the firing sequence. This sequence is crucial to minimize the AC flux density within the core, and therefore minimize heating and core losses.

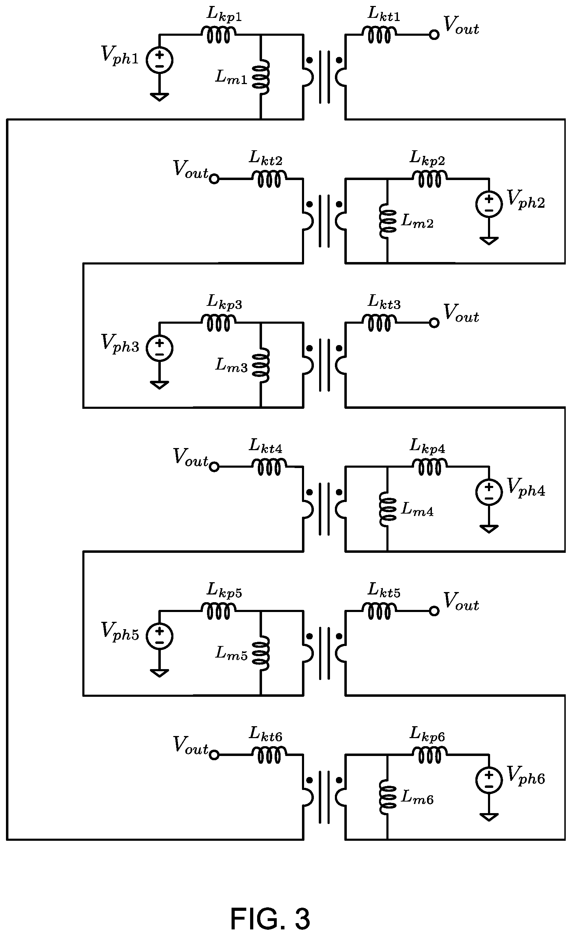

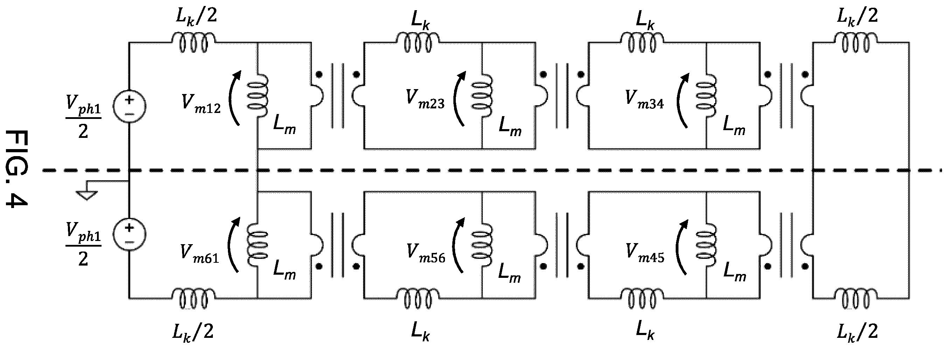

This may be demonstrated in reference to FIGS. 3 and 4. FIG. 3 presents a circuit diagram of a power converter with six converter paths (although a different number of converter paths may be provided - six is chosen for sake of illustration), with an equivalent voltage generator coupled to the input nodes of each of the converter paths.

Assuming that the leakage inductance for each elemental transformer is significantly less (i.e., 10x less) than the magnetizing inductance of each elemental transformer, that the leakage inductance of each first winding and each second winding is approximately the same, and that there are identical electrical parameters for each converter paths, the circuit of FIG.3 can be represented by the equivalent circuit of FIG. 4. The equivalent circuit of FIG. 4 is provided by supposing that only a single phase is active. That is, only one of the input nodes is provided with a firing voltage.

Due to the symmetry of the circuit and based on the equivalent circuit shown in the figure, the following equations illustrate how the voltage propagates across all phases: ${V}_{m 12} = \frac{{V}_{ph 1}}{2} {α}_{12}$ ${V}_{m 23} = {V}_{m 12} {α}_{23}$ ${V}_{m 34} = {V}_{m 23} {α}_{34}$ ${V}_{m 61} = - {V}_{m 12}$ ${V}_{m 56} = - {V}_{m 23}$ ${V}_{m 45} = - {V}_{m 34}$

From which the following equations can be derived: ${V}_{m 23} = \frac{5}{6} \frac{{V}_{ph 1}}{2}$ ${V}_{m 23} = \frac{3}{6} \frac{{V}_{ph 1}}{2}$ ${V}_{m 34} = \frac{1}{6} \frac{{V}_{ph 1}}{2}$ ${V}_{m 61} = - \frac{1}{6} \frac{{V}_{ph 1}}{2}$${V}_{m 56} = - \frac{3}{6} \frac{{V}_{ph 1}}{2}$ ${V}_{m 45} = - \frac{5}{6} \frac{{V}_{ph 1}}{2}$

This means that within the entire power converter (i.e., within the chain of converter paths), the summation of voltages is zero. However, the distribution of voltage exhibits a radial displacement and is directly influenced by the distance from the specific phase that is fired. Consequently, if the firing sequence accurately follows the actual physical phase sequence, it represents the worst-case scenario for magnetizing current ripple and, as a result, core losses.

Accordingly, for a power converter with N converter paths (N>3), where all converter paths supply the same load and are phase-shifted, it has been realised that at least one consecutive pair of selected converter paths in the phase firing sequence must not comprise windings that are inductively coupled with each other. That is, at least once in the phase firing sequence, adjacent converter paths (i.e., converter paths that are directly coupled via their windings) must not be fired. For example, after a given converter path is fired (i.e., a firing voltage is provided to the input node of the given converter path), the next converter path that is fired must have at least one converter path coupled between it and the given converter path.

Preferably, for at least 50% of consecutive pairs of selected converter paths in the phase firing sequence (i.e., in at least 50% of transitions between one fired phase to another fired phase), at least either the second next phase or the second previous phase (i.e., converter paths separated by at least one converter path) should be fired.

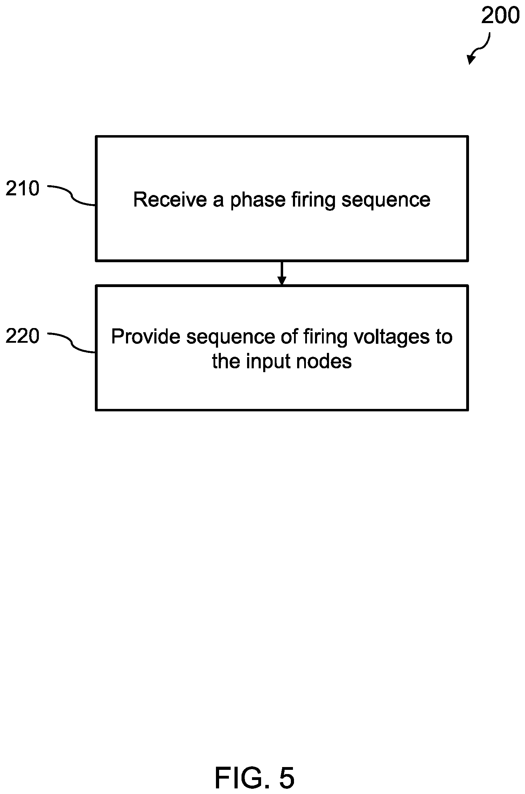

FIG. 5 is a flow diagram of a method for operating a power converter according to an embodiment. As described above, the power converter must have at least four converter paths, each configured to conduct current in a same direction between the input node and the output node. Each first winding of the converter paths is inductively coupled to a second winding of a different converter path, thereby forming a closed chain loop of converter paths. Each pair of inductively coupled inductors may be coupled via a core that is individual to each pair, or that is shared amongst all pairs (e.g., via a monolithic cores), and may thereby form respective elemental transformers.

In step 210, a phase firing sequence describing a sequence of selected converter paths amongst the converter paths is either received or generated. To be clear, the phase firing sequence identifies a series of converter paths of the power converter. The phase firing sequence is intended to present the sequence by which a firing input voltage is provided to input nodes of the converter paths.

Each converter path needs not be identified exactly once in a phase firing sequence. That is, a length of a phase firing sequence does not need to equal the number of converter paths. For example, given four converter paths labelled 1 to 4 (with converter path 1 being adjacent to converter path 2, converter path 2 being adjacent to converter path 3, converter path 3 being adjacent converter path 4, and converter path 4 being adjacent converter path 1, wherein adjacent means that the converter paths are directly coupled by their windings), the firing sequence may be as follows: 2-1-3-4-1-3-4-2-2-3-1-4. In this case different permutations are used in each of the four consecutive firing sequences, thereby providing a phase firing sequence having a length of 12. Alternatively, a sequence such as 1-3-1-4-2-4-2-3, ensures that on an average all fires are fired equally often, though the repetition rate may be based on more than N cycles. This sequence also ensures that only one (in this example 2-3) out of eight consecutive pairs of selected converter paths in the phase firing sequence comprise windings that are inductively coupled with each other.

More generally, it will be appreciated that a same phase firing sequence identifying each converter path once may not be continually repeated. Thus, the full phase firing sequence may comprise a plurality of sub-phase firing sequences that each identify each converter path once, but do so in a different order.

Nevertheless, in other cases, the phase firing sequence may identify each phase once before repeating itself. For example, given seven converter paths labelled 1 to 7, the firing sequence may be as follows: 1-3-5-7-2-4-6.

Importantly, at least one consecutive pair of selected converter paths in the phase firing sequence do not comprise windings that are inductively coupled with each other. That is, at least once in the phase firing sequence, the next identified converter path to be fired must not be directly coupled to the current converter path that has been fired. The converter paths must be separated by at least one converter path between them.

Indeed, it has been realised that the worst case scenario in terms of magnetizing ripple (and thus core losses) occurs when every consecutive pair of selected converter paths in the phase firing sequence are physically adjacent to each other (i.e., are coupled to each other via a first and second winding pair). The presently disclosed method therefore aims to reduce core losses by ensuring at least one consecutive pair of selected converter paths are physically separated by at least one other converter path.

More preferably, at least 50% of consecutive pairs of selected converter paths in the phase firing sequence may not comprise windings that are inductively coupled with each other. That is, at least 50% of consecutive pairs of selected converter paths in the phase firing sequence may be physically separated by at least one other converter path. This may therefore provide an improved firing sequence that further reduces magnetizing ripple, and consequently core losses.

In some embodiments, each consecutive pair of selected converter paths in the phase firing sequence may be indirectly coupled to each other via a same number of converter paths. That is, every consecutive pair of selected converter paths in the phase firing sequence may not comprise windings that are inductively coupled with each other. That is, the next identified converter path to be fired must not be directly coupled to the current converter path that has been fired. The converter paths must be separated by at a same number of converter paths between them.

For example, given seven converter paths labelled 1 to 7, the firing sequence may be as follows: 1-3-5-7-2-4-6, or 1-4-7-3-6-2-5. Given nine converter paths labelled 1 to 9, the firing sequence may be as follows 1-3-5-7-9-2-4-6-8, etc.

It is worth noting that this rule does not work when the power converter comprises four or six converter paths. For four converter paths, there is no regular number that can be constantly jumped between converter paths that will ensure every phase is fired whilst satisfying this condition. The same applies to six converter paths. To be clear, six is the highest number to which a highest common factor between itself and all the previous numbers is not one (i.e., does not have any co-primes). Hence, for five, seven and above converter paths is always possible to find at least a prime number which satisfies the condition.

It is important to highlight that due to the modular symmetry of the application, a predefined number of jumps can be expressed both in terms of a clockwise and/or counterclockwise reference notation. This means that every number of jumps which exceeds half the number of phases in a certain direction is equivalent to a number of jumps in the opposite direction equal to this excess. For example, in a six converter path system a continuous jump by 5 in a clockwise direction (i.e. resulting in a firing sequence 6-5-4-3-2-1) is equivalent to a continuous jump by 1 counterclockwise, which in the end coincides with the sequence 1-2-3-4-5-6 due to the modular symmetry.

In general, a firing sequence and its coupled pair obtained by reversing its order can be considered equivalent. Notably, this simplifies the analysis to just half the number of converter paths for the possible amounts of number of jumps.

To be clearer, six is the highest number to which a highest common factor between its half and all the previous numbers is not one (i.e., its half does not have any co-primes).

In some embodiments, the method may further comprise a preceding step of generating, using a firing sequence determination algorithm, the phase firing sequence. The firing sequence determination may generate a phase firing sequence that minimises magnetising ripple and thus reduces core losses. The firing sequence determination algorithm may be based on at least one of: a number of converter paths, a magnitude of the firing voltages, a switching frequency of the firing voltages, a leakage inductance of the inductively coupled pairs of windings, a magnetizing inductance of the inductively coupled pairs of windings, a load voltage coupled to the output nodes, and a geometrical parameter of cores of the inductively coupled pairs of windings.

In one example, the firing sequence determination algorithm is a machine-learning based model that receives inputs relating to the power converter, and outputs a phase firing sequence (which satisfies at least one of the disclosed conditions).

Identifying the best phase firing sequence is complex and reliant on a large number of factors. The best phase firing sequence for one power converter may differ from the best phase firing sequence of another power converter, even given a same number of converter paths.

To be clear, by "best" phase firing sequence, it is meant that a magnetizing ripple is reduced. In some cases, this means that a peak to peak maximum magnetic flux density amongst all inductively coupled pairs of windings of the converter paths is minimized. Additionally or alternatively, this may mean that a root mean square (RMS) magnetic flux density of the inductively coupled pairs of windings of the converter paths is minimized. In some cases, it is possible to minimise both of these factors. However, in other cases there is not a phase firing sequence that can minimise both factors.

Furthermore, a closed-form expression which directly provides an "optimal" phase firing sequence does not exist. Therefore, in some cases, each permutation of the phase firing sequence must be analysed and evaluated in order to identify a "best" or "optimal" phase firing sequence. It is clearly a problem that involves both the type of material used for the cores and the geometrical structure, which cannot be addressed analytically, as it represents a multi-objective optimization problem that requires considering the firing sequence in relation to the actual number of phases. Of course, the number of possible combinations increases as the number of converter paths increase, increasing the effort required to identify the best phase firing sequence.

Nevertheless, the disclosed rules enable the identification of a smaller number of combinations that may be assessed. By ensuring (i) each consecutive pair of selected converter paths are indirectly coupled to each other via a same number of converter paths; (ii) that the number is a coprime of the overall number of converter paths in the power converter; and (iii) that the number is half or less the overall number of converter paths in the power converter, the number of phase firing sequences to be assessed to find the optimal is greatly reduced.

In step 220, a sequence of firing voltages are provided to input nodes of the converter paths based on the phase firing sequence. That is, according to the phase firing sequence, a sequence of voltages are provided to input nodes associated with the converter paths.

Providing a firing voltage may include providing a fixed input voltage for a time interval with a certain duration to an input node associated with the identified converter path whilst providing a nominal (e.g., ground) voltage to input nodes associated with the other input nodes associated with the other converter paths.

The firing voltages may be provided one after another in a sequence. In some cases, as soon as a firing voltage is removed from an input node, another firing voltage is applied to a next input node as indicated by the phase firing sequence. In other cases, there may be a deadtime between providing the firing voltage, or there may be a small (compared to the time that a firing voltage is applied) degree of overlap in application of the firing voltage.

To this end, in some embodiments, each of the input nodes of the converter paths may be coupled to respective switching networks. In such an embodiment, providing the sequence of firing voltages comprises generating a voltage by the switching networks based on the phase firing sequence. Accordingly, the switching networks provide the firing voltages to the input nodes.

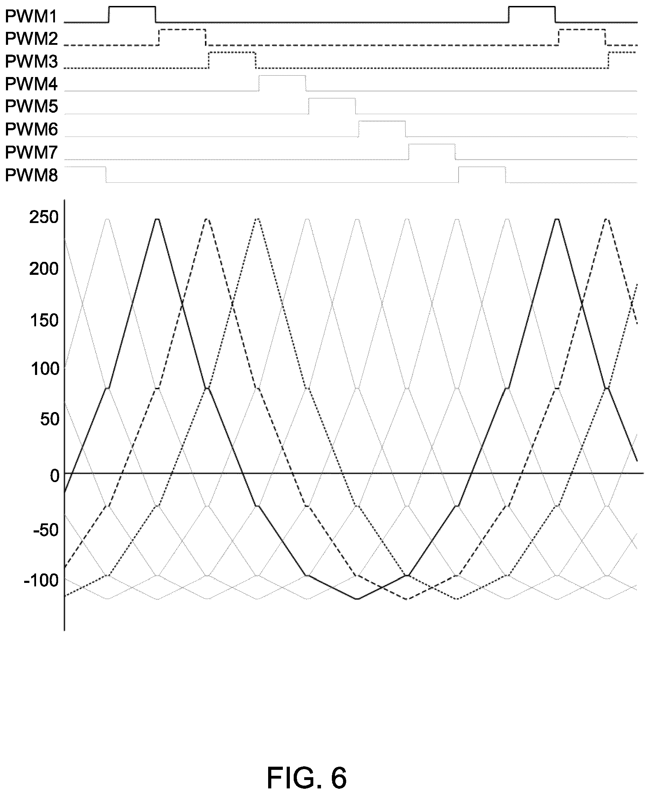

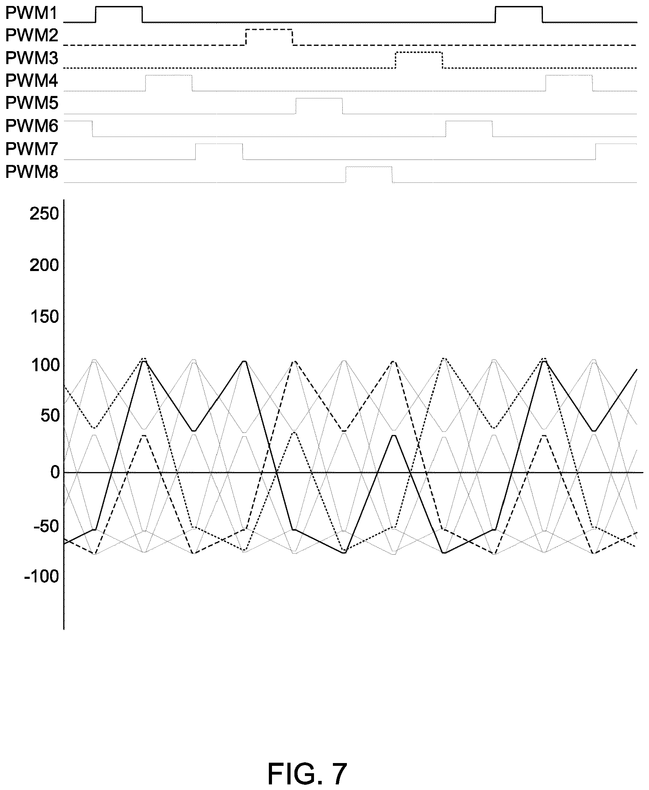

FIG. 6 and FIG. 7 exemplify the advantage of disclosed embodiments. Specifically, FIG. 6 presents a graph of a sequential phase firing sequence, and the magnetic flux density within each coupled inductor. FIG. 7 presents a graph of an improved phase firing sequence, and the magnetic flux density within each coupled inductor. The parameters of operation are a firing voltage of 6V, a switching frequency of 1MHz, a leakage inductance of each of the inductively coupled pairs of winding of 10nH, a magnetizing inductance of the inductively coupled pairs of windings of 600nH, a load voltage coupled to the output nodes of 0.75V, and an effective area of the core of the inductively coupled pair of windings of 2mm²,

More particularly, FIG. 6 presents the firing of input voltages for a power converter with eight converter paths. The phase firing sequence in this case is 1-2-3-4-5-6-7-8, as seen by the PWM signal sequentially provided to converter paths 1-8. In this case, the peak-to-peak magnetic flux density of each of the pairs of inductively coupled windings (i.e., each coupled inductor/elemental transformer) is approximately 345mT. This is the worst case scenario.

FIG. 7 presents a different firing of input voltages for a power converter with eight converter paths. The phase firing sequence in this case is 1-4-7-2-5-8-3-6 (i.e., continuous jumps of three converter paths), as seen by the PWM signal sequentially provided to converter paths 1-8. In this case, the peak-to-peak magnetic flux density of each of the pairs of inductively coupled windings (i.e., each coupled inductor/elemental transformer) is approximately 175mT - a 170mT reduction compared to the worst case scenario demonstrated in FIG. 6.

This is a significant difference that drastically reduces stress on the core of each windings, greatly reducing the losses of the device and improving overall performance of the power converter. That is, comparing the graphs of FIGS. 6 and 7 clearly demonstrates the significant influence of the firing sequence on core losses within each coupled inductor. Specifically, the optimal firing sequence is shown to drastically reduce the stress on the core material, thereby minimizing losses and improving the overall performance of the multi-phase system.

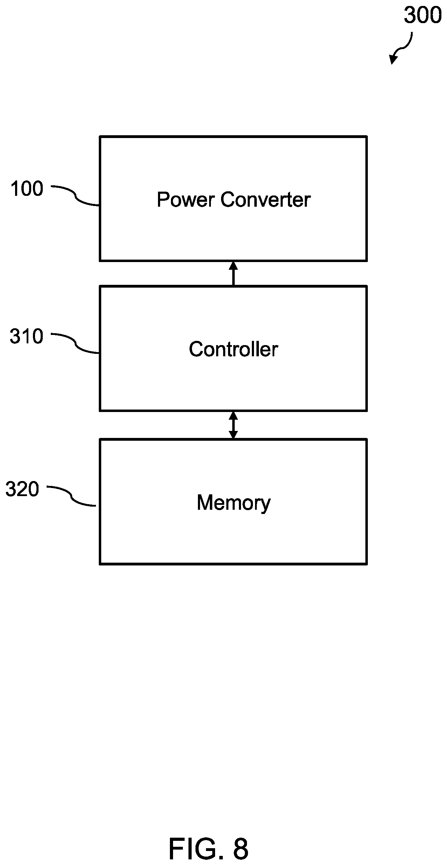

FIG. 8 is a block diagram of an apparatus 300 according to another embodiment. The apparatus comprises a power converter 100 (i.e., a circular voltage regulator), a controller 310, and a memory 320 coupled to the controller 310.

As before, the power converter 100 comprises at least four converter paths, each converter path comprising an input node, an output node, a first winding, and a second winding. The first winding is coupled in series between the input node and the second winding, and the second winding is coupled in series between the first winding and the output node. Each converter path is configured to conduct current in a same direction between the input node and the output node. Each first winding of the converter paths is inductively coupled to a second winding of a different converter path.

The controller 310 implements instructions from the memory 320, which stores instructions for the controller 310. The instructions are for receiving a phase firing sequence describing a sequence of selected converter paths amongst the converter paths. As before, at least one consecutive pair of selected converter paths in the phase firing sequence do not comprise windings that are inductively coupled with each other.

The instructions are further configured for providing a sequence of firing voltages to input nodes of the converter paths based on the phase firing sequence.

Accordingly, the apparatus 300 provides a power converter controlled in a efficient manner.

Although specific examples have been illustrated and described herein, it will be appreciated by those of ordinary skill in the art that a variety of alternate and/or equivalent implementations may be substituted for the specific examples shown and described without departing from the scope of the present disclosure. This application is intended to cover any adaptations or variations of the specific examples discussed herein. Therefore, it is intended that this disclosure be limited only by the claims and the equivalents thereof.

It should be noted that the methods and devices including its preferred embodiments as outlined in the present document may be used stand-alone or in combination with the other methods and devices disclosed in this document. In addition, the features outlined in the context of a device are also applicable to a corresponding method, and vice versa. Furthermore, all aspects of the methods and devices outlined in the present document may be arbitrarily combined. In particular, the features of the claims may be combined with one another in an arbitrary manner.

It should be noted that the description and drawings merely illustrate the principles of the proposed methods and systems. Those skilled in the art will be able to implement various arrangements that, although not explicitly described or shown herein, embody the principles of the invention and are included within its spirit and scope. Furthermore, all examples and embodiments outlined in the present document are principally intended expressly to be only for explanatory purposes to help the reader in understanding the principles of the proposed methods and systems. Furthermore, all statements herein providing principles, aspects, and embodiments of the invention, as well as specific examples thereof, are intended to encompass equivalents thereof.

The following embodiments are disclosed:
1. A method for operating a power converter, the power converter comprising:
   at least four converter paths, each converter path comprising an input node, an output node, a first winding, and a second winding, wherein the first winding is coupled in series between the input node and the second winding, and the second winding is coupled in series between the first winding and the output node, wherein each converter path is configured to conduct current in a same direction between the input node and the output node, and wherein each winding of each of the converter paths is inductively coupled to a winding of a different converter path, wherein the method comprises:
   receiving a phase firing sequence describing a sequence of selected converter paths amongst the converter paths, wherein at least one consecutive pair of selected converter paths in the phase firing sequence do not comprise windings that are inductively coupled with each other; and
   providing a sequence of firing voltages to input nodes of the converter paths based on the phase firing sequence.
2. The method of embodiment 1, wherein at least 50% of consecutive pairs of selected converter paths in the phase firing sequence do not comprise windings that are inductively coupled with each other.
3. The method of embodiment 1 or 2, wherein each consecutive pair of selected converter paths in the phase firing sequence are indirectly coupled to each other via a same number of converter paths.
4. The method of any of embodiments 1-3, wherein the phase firing sequence includes each of the converter paths at least once.
5. The method of any of embodiments 1-4, wherein the phase firing sequence is configured to minimise a peak to peak maximum magnetic flux density amongst all inductively coupled pairs of windings of the converter paths.
6. The method of any of embodiments 1-5, wherein the phase firing sequence is configured to minimise an RMS magnetic flux density of the inductively coupled pairs of windings of the converter paths.
7. The method of any of embodiments 1-6, wherein the phase firing sequence is based on at least one of: the number of converter paths, a magnitude of the firing voltages, a switching frequency of the firing voltages, a leakage inductance of the inductively coupled pairs of windings, a magnetizing inductance of the inductively coupled pairs of windings, a load voltage coupled to the output nodes, and a geometrical parameter of cores of the inductively coupled pairs of windings.
8. The method of any of embodiments 1-7, further comprising a preceding step of generating, using a firing sequence determination algorithm, the phase firing sequence based on at least one of: a number of converter paths, a magnitude of the firing voltages, a switching frequency of the firing voltages, a leakage inductance of the inductively coupled pairs of windings, a magnetizing inductance of the inductively coupled pairs of windings, a load voltage coupled to the output nodes, and a geometrical parameter of cores of the inductively coupled pairs of windings.
9. The method of any of embodiments 1-8, wherein each of the input nodes of the converter paths are coupled to respective switching networks, and wherein providing the sequence of firing voltages comprises generating a voltage by the switching networks based on the phase firing sequence.
10. The method of any of embodiments 1-9, wherein each switching network is coupled to a common input voltage.
11. The method of any of embodiments 1-10, wherein the first winding and second winding of each converter path include a same number of turns.
12. The method of any of embodiments 1-11, wherein each of the converter paths have a substantially similar direct current resistance.
13. A computer program comprising instructions which, when said computer program is run on a computer, are adapted to implement the method of any of claims 1-12.
14. An apparatus comprising:
   a power converter comprising at least four converter paths, each converter path comprising an input node, an output node, a first winding, and a second winding, wherein the first winding is coupled in series between the input node and the second winding, and the second winding is coupled in series between the first winding and the output node, wherein each converter path is configured to conduct current in a same direction between the input node and the output node, and wherein each winding of each of the converter paths is inductively coupled to a winding of a different converter path;
   a controller; and
   a memory coupled to the controller, the memory for storing instructions for the controller, the instructions for:
      receiving a phase firing sequence describing a sequence of selected converter paths amongst the converter paths, wherein at least one consecutive pair of selected converter paths in the phase firing sequence do not comprise windings that are inductively coupled with each other; and
      providing a sequence of firing voltages to input nodes of the converter paths based on the phase firing sequence.

## Claims

1. A method (200) for operating a power converter (100), the power converter comprising:
at least four converter paths (101a-d), each converter path comprising an input node (110a-d), an output node (120a-d), a first winding (130a-d), and a second winding (140a-d), wherein the first winding is coupled in series between the input node and the second winding, and the second winding is coupled in series between the first winding and the output node, wherein each converter path is configured to conduct current in a same direction between the input node and the output node, and wherein each winding of each of the converter paths is inductively coupled to a winding of a different converter path,
wherein the method comprises:
receiving (210) a phase firing sequence describing a sequence of selected converter paths amongst the converter paths, wherein at least one consecutive pair of selected converter paths in the phase firing sequence do not comprise windings that are inductively coupled with each other; and
providing (220) a sequence of firing voltages to input nodes of the converter paths based on the phase firing sequence.

2. The method of claim 1, wherein at least 50% of consecutive pairs of selected converter paths in the phase firing sequence do not comprise windings that are inductively coupled with each other.

3. The method of claim 1 or 2, wherein each consecutive pair of selected converter paths in the firing sequence are indirectly coupled to each other via a same number of converter paths.

4. The method of any of claims 1-3, wherein the phase firing sequence includes each of the converter paths (101a-d) at least once.

5. The method of any of claims 1-4, wherein the phase firing sequence is configured to minimise a maximum peak to peak magnetic flux density amongst all inductively coupled pairs of windings of the converter paths (101a-d).

6. The method of any of claims 1-5, wherein the phase firing sequence is configured to minimise an RMS magnetic flux density of the inductively coupled pairs of windings of the converter paths (101a-d).

7. The method of any of claims 1-6, wherein the phase firing sequence is based on at least one of: a number of converter paths (101a-d), a magnitude of the firing voltages, a switching frequency of the firing voltages, a leakage inductance of the inductively coupled pairs of windings, a magnetizing inductance of the inductively coupled pairs of windings, a load voltage coupled to the output nodes (120a-d), and a geometrical parameter of cores of the inductively coupled pairs of windings.

8. The method of any of claims 1-7, further comprising a preceding step of generating, using a firing sequence determination algorithm, the phase firing sequence based on at least one of: a number of converter paths (101a-d), a magnitude of the firing voltages, a switching frequency of the firing voltages, a leakage inductance of the inductively coupled pairs of windings, a magnetizing inductance of the inductively coupled pairs of windings, a load voltage coupled to the output nodes (120a-d), and a geometrical parameter of cores of the inductively coupled pairs of windings.

9. The method of any of claims 1-8, wherein each of the input nodes (110a-d) of the converter paths (101a-d) are coupled to respective switching networks, and wherein providing the sequence of firing voltages comprises generating a voltage by the switching networks based on the phase firing sequence.

10. The method of claim 9, wherein each switching network is coupled to a common input voltage.

11. The method of any of claims 1-10, wherein the first winding (130a-d) and second winding (140a-d) of each converter path include a same number of turns.

12. The method of claim 11, wherein each of the converter paths (101a-d) have a substantially similar direct current resistance.

13. A computer program comprising instructions which, when said computer program is run on a computer, are adapted to implement the method of any of claims 1-12.

14. An apparatus (300) comprising:
a power converter (100) comprising at least four converter paths (101a-d), each converter path comprising an input node (110a-d), an output node (120a-d), a first winding (130a-d), and a second winding (140a-d), wherein the first winding is coupled in series between the input node and the second winding, and the second winding is coupled in series between the first winding and the output node, wherein each converter path is configured to conduct current in a same direction between the input node and the output node, and wherein each winding of each of the converter paths is inductively coupled to a winding of a different converter path;
a controller (310); and
a memory (320) coupled to the controller, the memory for storing instructions for the controller, the instructions for:
receiving (210) a phase firing sequence describing a sequence of selected converter paths amongst the converter paths, wherein at least one consecutive pair of selected converter paths in the phase firing sequence do not comprise windings that are inductively coupled with each other; and
providing (220) a sequence of firing voltages to input nodes of the converter paths based on the phase firing sequence.

## Amended claims

### Amended claims in accordance with Rule 137(2) EPC.

1. A method (200) for operating a power converter (100), the power converter comprising:
four or six converter paths (101a-d), each converter path comprising an input node (110a-d), an output node (120a-d), a first winding (130a-d), and a second winding (140a-d), wherein the first winding is coupled in series between the input node and the second winding, and the second winding is coupled in series between the first winding and the output node, wherein each converter path is configured to conduct current in a same direction between the input node and the output node, and wherein each winding of each of the converter paths is inductively coupled to a winding of a different converter path,
wherein the method comprises:
receiving (210) a phase firing sequence describing a sequence of selected converter paths amongst the converter paths, wherein at least one consecutive pair of selected converter paths in the phase firing sequence do not comprise windings that are inductively coupled with each other; and
providing (220) a sequence of firing voltages to input nodes of the converter paths based on the phase firing sequence.

2. The method of claim 1, wherein at least 50% of consecutive pairs of selected converter paths in the phase firing sequence do not comprise windings that are inductively coupled with each other.

3. The method of any of claims 1-2, wherein the phase firing sequence includes each of the converter paths (101a-d) at least once.

4. The method of any of claims 1-3, wherein the phase firing sequence is configured to minimise a maximum peak to peak magnetic flux density amongst all inductively coupled pairs of windings of the converter paths (101a-d).

5. The method of any of claims 1-4, wherein the phase firing sequence is configured to minimise an RMS magnetic flux density of the inductively coupled pairs of windings of the converter paths (101a-d).

6. The method of any of claims 1-5, wherein the phase firing sequence is based on at least one of: a number of converter paths (101a-d), a magnitude of the firing voltages, a switching frequency of the firing voltages, a leakage inductance of the inductively coupled pairs of windings, a magnetizing inductance of the inductively coupled pairs of windings, a load voltage coupled to the output nodes (120a-d), and a geometrical parameter of cores of the inductively coupled pairs of windings.

7. The method of any of claims 1-6, further comprising a preceding step of generating, using a firing sequence determination algorithm, the phase firing sequence based on at least one of: a number of converter paths (101a-d), a magnitude of the firing voltages, a switching frequency of the firing voltages, a leakage inductance of the inductively coupled pairs of windings, a magnetizing inductance of the inductively coupled pairs of windings, a load voltage coupled to the output nodes (120a-d), and a geometrical parameter of cores of the inductively coupled pairs of windings.

8. The method of any of claims 1-7, wherein each of the input nodes (110a-d) of the converter paths (101a-d) are coupled to respective switching networks, and wherein providing the sequence of firing voltages comprises generating a voltage by the switching networks based on the phase firing sequence.

9. The method of claim 8, wherein each switching network is coupled to a common input voltage.

10. The method of any of claims 1-9, wherein the first winding (130a-d) and second winding (140a-d) of each converter path include a same number of turns.

11. The method of claim 10, wherein each of the converter paths (101a-d) have a substantially similar direct current resistance.

12. A computer program comprising instructions which, when said computer program is run on a computer, are adapted to implement the method of any of claims 1-11.

13. An apparatus (300) comprising:
a power converter (100) comprising four or six converter paths (101a-d), each converter path comprising an input node (110a-d), an output node (120a-d), a first winding (130a-d), and a second winding (140a-d), wherein the first winding is coupled in series between the input node and the second winding, and the second winding is coupled in series between the first winding and the output node, wherein each converter path is configured to conduct current in a same direction between the input node and the output node, and wherein each winding of each of the converter paths is inductively coupled to a winding of a different converter path;
a controller (310); and
a memory (320) coupled to the controller, the memory for storing instructions for the controller, the instructions for:
receiving (210) a phase firing sequence describing a sequence of selected converter paths amongst the converter paths, wherein at least one consecutive pair of selected converter paths in the phase firing sequence do not comprise windings that are inductively coupled with each other; and
providing (220) a sequence of firing voltages to input nodes of the converter paths based on the phase firing sequence.
